# EUROPEAN PATENT APPLICATION

(11) **EP 1 798 967 A2**
(43) Date of publication of application: **20.06.2007**
(21) Application number: 06256341.6
(22) Date of filing: 13.12.2006
(51) Int. Cl.: H04N 5/64

(54) **Display device**

(30) Priority: 14.12.2005 JP 2005360339
(71) Applicant: ORION ELECTRIC CO., Ltd., Fukui 915-8555 (JP)
(72) Inventor: Oda, Takato, Orion Electric Co., Ltd., Echizen-city Fukui 915-8555 (JP); Moroishi, Masahide, c/o Orion Electric Co., Ltd., Echizen-city Fukui 915-8555 (JP)
(74) Representative: Paget, Hugh Charles Edward

(57) **Abstract**

The present invention provides a display device capable of simplifying assembling operation and maintenance operation, and also capable of reducing the occurrence of a sink mark on the surface of the casing. All internal components are mounted on a chassis 41. Actually, a display panel 42 is mounted on the front side of the chassis 41 (on the side where a front cabinet 2 is positioned), and various circuit boards (power supply board 43, AV board 44, MPEG board 45), a speaker 46 and a recording and reproducing unit 47 are mounted on the rear side of the chassis 41 (on the side where a back cabinet 3 is positioned). A stand supporting unit 49 is attached to the bottom side of the chassis 41 and an operation board 48 is attached to the upper surface of the chassis 41.

## Description

### BACKGROUND OF THE INVENTION

### Field of the Invention

The present invention relates to a display device, and more specifically, to a display device such as a liquid crystal display or a plasma display comprising a casing composed of a front cabinet and a back cabinet constituting the external appearance of the device and capable of being divided to front and rear portions, a display unit disposed in the interior of the casing and exposed to the exterior through an opening window formed on the front cabinet, and a chassis similarly assembled in the interior of the cabinet positioned on the rear side of the display unit.

### Description of the Related Art

Recently, display devices utilizing liquid crystal or plasma for displaying video images such as television programs, DVD and video or for displaying the screen of personal computers have been developed and distributed. Such display devices are respectively equipped with a display panel utilizing liquid crystal or plasma, display device supporting means for supporting the display device, a chassis for mounting the same, various circuit boards and a casing, but conventionally, these various components are assembled in a complex manner in order to manufacture the display device. For example, the various circuit boards are mounted on various areas of the chassis, the casing and the like. Therefore, the assembly operation is complex.

Japanese Patent Application Laid-Open Publication No. 2003-167235 (Patent document 1) discloses an art of simplifying the assembly operation by supporting and fixing the internal components via the casing, and an art of realizing a superior positional accuracy by providing ribs on the casing for supporting the components.

By utilizing the art disclosed in patent document 1, the assembly operation can be simplified, but when it is necessary to perform maintenance operation such as repairing and testing, the maintenance operation becomes complex since the internal components are attached to the casing. Another drawback of the prior art is that the design of the molds for forming the casing having ribs for attaching the internal components to the casing becomes complex, and yet another drawback is that a number of sink marks occur on the surface of the casing.

### SUMMARY OF THE INVENTION

The present invention aims at solving the problems mentioned above, by providing a display device capable of simplifying the assembly operation and maintenance operation. Furthermore, the present invention aims at providing a display device capable of simplifying the molds for forming the casing and reducing a sink mark occurring on the surface of the casing.

The display device according to a first aspect comprises a chassis and internal components disposed in an interior of a front cabinet constituting a front portion and a back cabinet constituting a rear portion of a casing capable of being divided in front and rear directions, characterized in that all the internal components are mounted on the chassis.

The display device according to a second aspect comprises a display device according to aspect 1, wherein the internal components are a display panel and a circuit board, and wherein an opening is formed on substantially the center area of the front cabinet, through which opening the display panel is exposed.

The display device according to a third aspect comprises a display device according to aspect 1, wherein the internal components are a display panel, a power supply board, an AV board, an MPEG board, a speaker, a recording and reproducing unit and an operation board, and wherein an opening is formed on substantially the center area of the front cabinet, through which opening the display panel is exposed, and an operation button is formed integrally on the surface of the front cabinet.

The display device according to a fourth aspect comprises a display device according to any one of aspects 1 through 3, wherein the front cabinet and the back cabinet are attached directly.

According to the present invention, it becomes possible to provide a display device capable of simplifying the assembly operation and maintenance operation by having all the internal components mounted on the chassis. Furthermore, it becomes possible to provide a display device capable of simplifying the molds for forming the casing and reducing the occurrence of the sink mark on the surface of the casing, since there is no need to form ribs for mounting internal components on the casing.

According to the present invention, since the chassis acts as a basis to assemble all the internal components into a single unit to which the front cabinet and the back cabinet constituting the casing are attached, the components which were conventionally respectively attached to the casing and the chassis can all be assembled on a single chassis, so that the operation steps for manufacturing the display device can be improved. Furthermore, the maintenance operation such as repairing and testing operation can be performed by simply separating the front cabinet and the back cabinet.

Furthermore, according to the present invention in which the internal components are assembled into a unit, it becomes unnecessary to form mounting bosses and positioning ribs for mounting the internal components on the front cabinet and the back cabinet, so the forms of the front cabinet and the back cabinet can be simplified, and the molds for forming the same can also be desirably simplified, according to which the costs related to manufacturing the molds can be cut down. Moreover, since bosses and ribs formed on the front and back cabinets are reduced, the drawbacks related to the appearance of the front cabinet and the back cabinet such as the sink mark formed on the surface thereof can be reduced.

Further according to the present invention, the front cabinet and the back cabinet that are to be assembled to the front and rear sides of the internal unit (a unit formed by mounting the internal components to the chassis acting as the basis) are directly fixed to each other via screws, so that the number of screws can be reduced compared to the case where each cabinet is attached respectively to the internal unit, and the costs of the display device can be reduced by the reduction in the number of components.

### BRIEF DESCRIPTION OF THE DRAWINGS

FIG. 1 is a perspective view showing the external appearance of a display device according to a preferred embodiment of the present invention;
FIG. 2 is an exploded perspective view showing the internal components of the display device according to the preferred embodiment of the present invention;
FIG. 3 is a perspective view showing the internal unit in which the internal components are formed as a unit with the chassis acting as the basis according to the present embodiment;
FIG. 4 is an exploded perspective view showing the state prior to attaching the front cabinet and back cabinet to the internal unit according to the embodiment of the present invention; and
FIG. 5 is a partially cross-sectional perspective view and a cross-sectional side view of the display device according to the embodiment of the present invention.

### DETAILED DESCRIPTION OF THE PREFERRED EMBODIMENTS

Now, the preferred embodiment of the present invention will be described with reference to the drawings. The following embodiment is a mere example of the present invention, and it will not restrict the scope of the present invention.

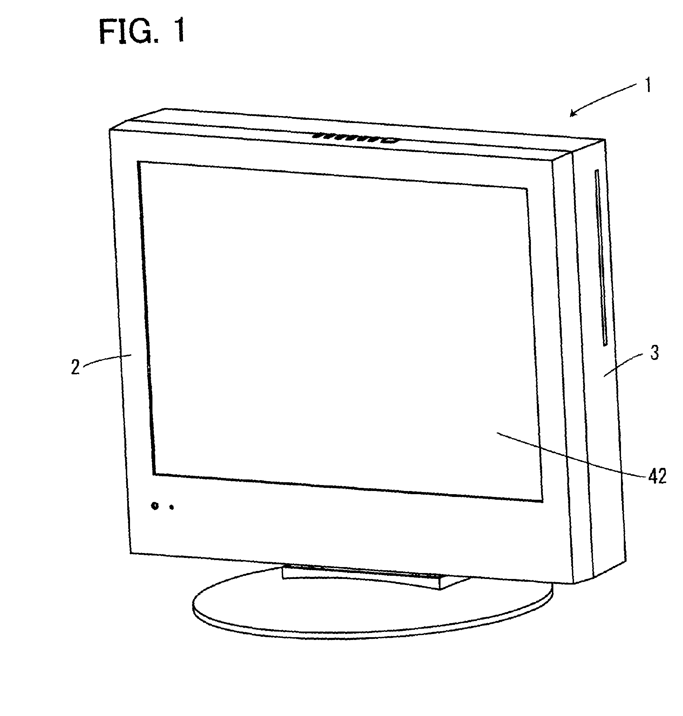

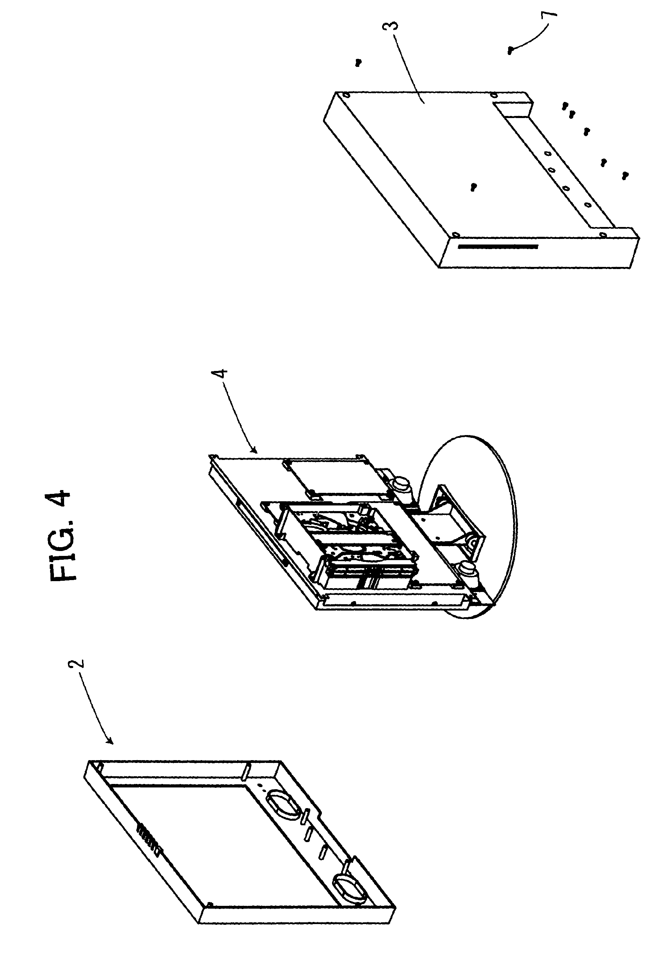

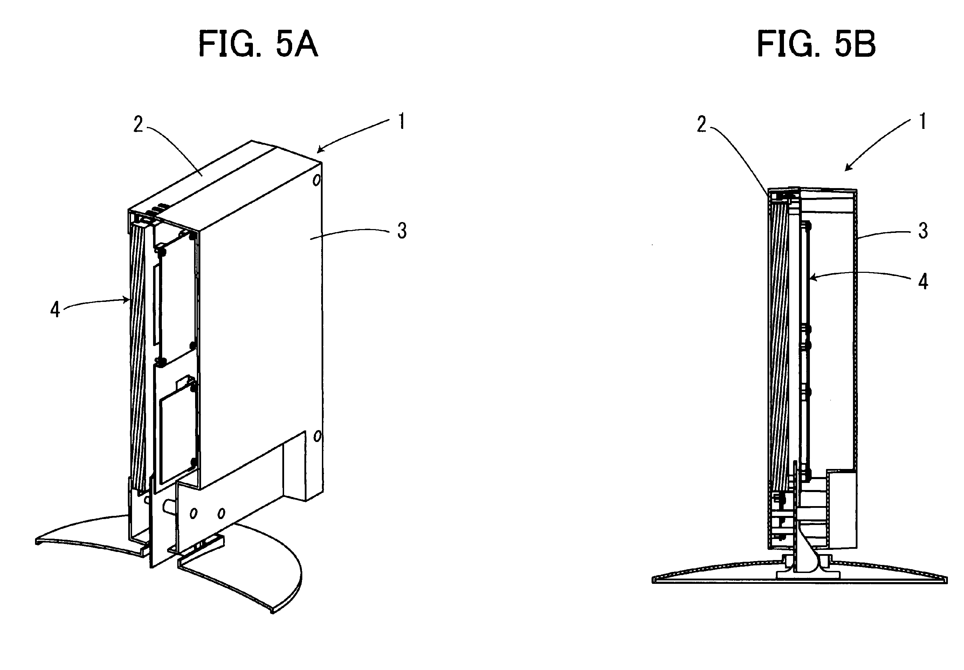

FIG. 1 is a perspective view showing the external appearance of a display device 1. The casing thereof is dividable into front and rear areas, and it is composed of a front cabinet 2 and a back cabinet 3. An opening window is formed on substantially the center portion of the front cabinet 2, through which is exposed a display panel 42. FIG. 4 is an exploded perspective view showing the state prior to attaching the front cabinet 2 and the back cabinet 3 to the internal unit 4. The front cabinet 2 and the back cabinet 3 are directly engaged via screws 7. FIGS. 5A and 5B are partially cross-sectional perspective view and cross-sectional side view of the display device 1.

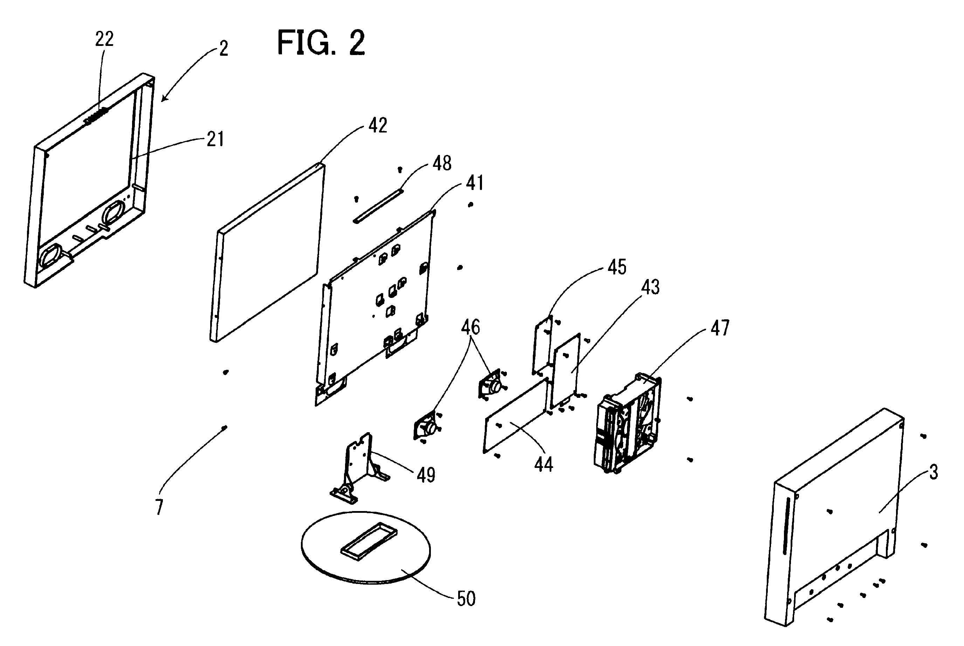

FIG. 2 is an exploded perspective view illustrating the internal components of the display device 1. Here, the internal components include the display panel 42 for displaying images, various circuit boards (such as a power supply board 43 for converting the input voltage supplied from an external power supply to a voltage used in the display device 1, an AV board 44 for processing audio signals and video signals, and an MPEG board 45 for encoding and decoding MPEG), a speaker 46 for outputting audio, a recording and reproducing unit 47 for recording and reproducing data on a DVD, the operation board 48 having switches being turned on and off in conjunction with an operation button 22 operated by a user by pressing the button, and a display device supporting means composed of a stand supporting unit 49 and a stand 50 for supporting the display device 1. These internal components are all mounted on a chassis 41. The front cabinet 2 has an opening window 21 formed substantially at the center thereof, and the operation button 22 disposed on the upper surface thereof.

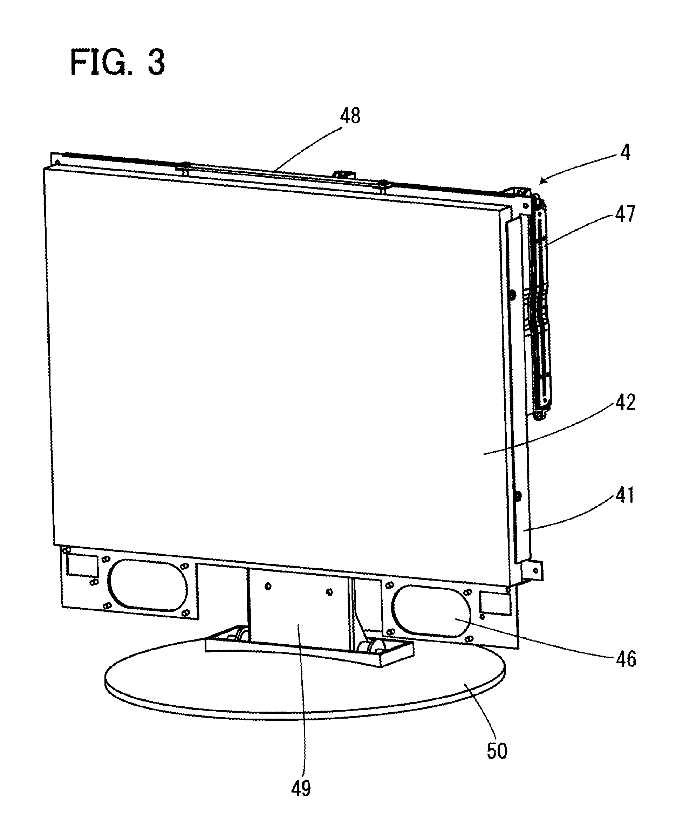

FIG. 3 is a perspective view showing the internal unit 4 in which the internal components are formed into a unit with the chassis 41 acting as the basis, wherein all the internal components are mounted on the chassis 41. Actually, the display panel 42 is mounted on the front side of the chassis 41 (the side on which the front cabinet 2 will be positioned), and various circuit boards (power supply board 43, AV board 44 and MPEG board 45), the speaker 46 and the recording and reproducing unit 47 are mounted on the rear side of the chassis 41 (the side on which the back cabinet 3 will be positioned). A stand supporting unit 49 is attached to the bottom side of the chassis 41, and an operation board 48 is mounted on the upper surface of the chassis 41. According to the present embodiment, the operation board 48 is mounted on the upper surface of the chassis 41, but the present invention is not restricted thereto, and the operation board 48 can be mounted on the chassis 41 corresponding to where the operation button 22 is disposed.

Now, an embodiment of the steps for mounting the internal components onto the chassis 41 will be described. The display device 1 according to the present embodiment is a display device 1 having a built-in recording and reproducing unit 47, but the present invention is not restricted thereto, and the display device can be a display device 1 without a built-in recording and reproducing unit 47.

At first, the display surface of the display panel 42 is positioned downward, and the chassis 41 is placed on the rear side of the display panel 42 (for example, if the display unit of the display panel 42 is disposed on the mounting surface such as a table, the rear side corresponds to the upper side of the display panel 42 placed on the mounting surface), and screws 7 are engaged from the side surfaces of the chassis 41 so as to assemble the display panel 42 with the chassis 41.

Next, various circuit boards (power supply board 43, AV board 44 and MPEG board 45), the speaker 46 and the recording and reproducing unit 47 are fixed via screws 7 on the rear side of the chassis 41.

Thereafter, the stand supporting unit 49 having the stand 50 attached thereto in advance is fixed via screws 7 to the bottom side of the chassis 41.

Next, the chassis 41 is raised so that the bottom side of the stand 50 is disposed as the mounting surface side, and then the operation board 48 having switches is fixed via screws 7 to the upper side of the chassis 41. Thus, the internal components of the display device 1 are formed as a unit with the chassis 41 acting as the basis (this unit is called the internal unit 4).

Finally, the front cabinet 2 and the back cabinet 3 are assembled and fixed via screws 7 to the front side of the internal unit 4 (on the side of the chassis 41 where the display panel 42 is mounted) and the rear side thereof (the side of the chassis 41 on which the various circuit boards, the speaker 46 and the recording and reproducing unit 47 are mounted).

Except for the final step of sandwiching the internal unit 4 with the front cabinet 2 and the back cabinet 3, the order for mounting the internal components on the chassis 41 can be varied from that described above (that is, the various circuit boards, the stand supporting unit 49 and the like can be mounted on the chassis 41 before mounting the display panel 42, as long as the front cabinet 2 and the back cabinet 3 constituting the casing are mounted at the final step).

Furthermore, upon assembling the internal unit 4, the front cabinet 2 and the back cabinet 3, it is preferable that the front cabinet 2 and the back cabinet 3 has bosses and holes formed thereto for directly engaging the front cabinet 2 and the back cabinet 3 via screws 7. That is, by engaging the front cabinet 2 and the back cabinet 3 directly, it becomes possible to reduce the number of screws 7 used for engagement compared to the case where the front cabinet 2 and the back cabinet 3 are respectively engaged and fixed to the internal unit 4. Further, it is most preferable to form through holes to the chassis 41 of the internal unit 4 capable of having bosses formed on the front cabinet 2 pass therethrough, so that the bosses on the front cabinet 2 can be protruded through the through holes to the rear side of the internal unit 4 and assembled with the holes on the back cabinet 3, and have screws 7 engaged thereto from the rear side of the back cabinet 3.

As described, the present invention enables to provide a display device capable of simplifying the assembling operation and maintenance operation by having all the internal components mounted on the chassis. Further, the present invention provides a display device where the casing does not have any ribs for mounting the internal components, so that the casing can be formed using simplified molds, and the occurrence of a sink mark on the surface of the casing can be reduced. Moreover, the present invention provides a display device capable of reducing the number of screws by designing the front cabinet and the back cabinet to be fixed to each other directly via screws.

## Claims

1. A display device comprising a chassis and internal components disposed in an interior of a front cabinet constituting a front portion and a back cabinet constituting a rear portion of a casing capable of being divided in front and rear directions, **characterized in that** all the internal components are mounted on the chassis.

2. The display device according to claim 1, wherein the internal components are a display panel and a circuit board, and wherein an opening is formed on substantially the center area of the front cabinet, through which opening the display panel is exposed.

3. The display device according to claim 1, wherein the internal components are a display panel, a power supply board, an AV board, an MPEG board, a speaker, a recording and reproducing unit and an operation board, and wherein an opening is formed on substantially the center area of the front cabinet, through which opening the display panel is exposed, and an operation button is formed integrally on the surface of the front cabinet.

4. The display device according to any one of claims 1 through 3, wherein the front cabinet and the back cabinet are attached directly.
